# EUROPEAN PATENT SPECIFICATION

(11) **EP 1 811 402 B1**
(45) Date of publication and mention of the grant of the patent: **01.05.2013**
(21) Application number: 05782392.4
(22) Date of filing: 12.09.2005
(51) Int. Cl.: G06F 17/30, G06F 12/00, G06F 13/00, H04L 29/06, H04L 29/08

(54) **NODE DEVICE, COMMON INFORMATION UPDATE METHOD, COMMON INFORMATION STORAGE METHOD, AND PROGRAM**
KNOTENEINRICHTUNG, VERFAHREN ZUR AKTUALISIERUNG GEMEINSAMER INFORMATIONEN, VERFAHREN ZUM SPEICHERN GEMEINSAMER INFORMATIONEN UND PROGRAMM
DISPOSITIF NOEUD, MÉTHODE ET PROGRAMME DE MISE À JOUR D'INFORMATIONS COMMUNES, ET MÉTHODE ET PROGRAMME DE STOCKAGE D'INFORMATIONS COMMUNES

(30) Priority: 30.09.2004 JP 2004285895
(43) Date of publication of application: 25.07.2007
(73) Proprietor: Brother Kogyo Kabushiki Kaisha, Nagoya-shi, Aichi-ken 467-8561 (JP); Xing Inc., Nagoya-shi, Aichi 4670851 (JP)
(72) Inventor: USHIYAMA, Kentaro, Brother Kogyo Kabushiki Kaisha, Nagoya-shi, Aichi 467-8561 (JP); HIBINO, Yoshihiko, Brother Kogyo Kabushiki Kaisha, Nagoya-shi, Aichi 467-8561 (JP); KIYOHARA, Yuji, Brother Kogyo Kabushiki Kaisha, Nagoya-shi, Aichi 467-8561 (JP); SUZUKI, Hiroaki, Brother Kogyo Kabushiki Kaisha, Nagoya-shi, Aichi 467-8561 (JP); IIJIMA, Koichi, Xing Inc., Nagoya-shi, Aichi 467-0851 (JP)
(74) Representative: Kuhnen & Wacker
(86) International application number: PCT/JP2005/016740
(87) International publication number: WO 2006/038433

(56) References cited:
- by Matthew Harren , Boon Thau Loo , Ryan Huebsch , Joseph M. Hellerstein , Scott Shenker , Ion Stoica: "Complex Queries in DHT-based Peer-to-Peer Networks" 1 January 2002 (2002-01-01), XP002584523 Retrieved from the Internet: URL:http://db.cs.berkeley.edu/jmh/iptps02. pdf> [retrieved on 2010-05-27]
- ROWSTRON A ET AL: "Storage management and caching in PAST, a large-scale, persistent peer-to-peer storage utility" OPERATING SYSTEMS REVIEW, ACM, NEW YORK, NY, US LNKD- DOI:10.1145/502059.502053, no. 5, 21 October 2001 (2001-10-21), pages 188-201, XP002302659 ISSN: 0163-5980
- NAKAUCHI K. ET AL: 'Ubiquitous Kankyo ni Muketa Bunsan Contents Hakken.' THE INSTITUTE OF ELECTRONICS, INFORMATION AND COMMUNICATION ENGINEERS GIJUTSU KENKYU HOKOKU. vol. 102, no. 352, 23 September 2002, pages 7 - 12, XP002998442
- NISHIMURA K.: 'Nihon Hatsu, Chumoku no P2P Base no Group Ware 'ArielAirOne' wa Broadband Jidan no Killer Application to Naruka?.' ASCII. vol. 26, no. 9, 01 September 2002, pages 226 - 229, XP002998443

## Description

### Technical Field

The present invention relates to a peer-to-peer (P2P) type content distribution system having a plurality of node apparatuses connected to each other via a network and, more particularly, to a technical field of a content distribution system and method and the like in which content data to be distributed from one node apparatus to another node apparatus is distributed and stored in a plurality of node apparatuses.

### Background Art

In a content distribution system of this kind, each of node apparatuses has a list describing information related to content data distributed and stored in a plurality of node apparatuses (for example, attribute information of content data (name of content or the like) and IP addresses of node apparatuses storing content data) and, on the basis of the information described in the list, the user can download desired content data. Such a list is shared information to be commonly used by a plurality of node apparatuses and generally managed by a management server for managing all of content data stored in a content distribution system. The list is distributed from the management server to each of the node apparatuses.

For example, Japanese Patent Laid-Open No. 2002-318720 discloses an index server existing at the top level as a management server of this kind and managing all of content information in a content distribution management system. Document "Complex Queries in DttT-based Peer-to-Peer Networks" discloses a method of content search and retrieval on top of DHT-based P2P Systems.

### DISCLOSURE OF THE INVENTION

### Problems to be solved by the Invention

In a peer-to-peer type content distribution system, the frequency of withdrawal (due to power disconnection or failure of a node apparatus, partial disconnection of a network, or the like) and participation of node apparatuses is high. Moreover, the frequency of newly storing or erasing content data to/from a node apparatus is high. Consequently, the updating of the list as described above has to be performed frequently. It is therefore considered that the management server as described above is necessary to always maintain the list in the latest state.

However, in a content distribution system in which the management server manages the list, a problem undesirably occurs such that the more the number of node apparatuses increases, the more the server load increases and the more the network load is concentrated in one place, and distributable lists are limited at the time when updating the list, for example. Another problem is that the list cannot be updated when the management server goes down (for example, due to a failure or the like). Still another problem is management cost for the management of lists by the management server.

As methods using no management server, pure P2P type distribution systems such as Gnutella, Freenet, Winny, and the like have been also devised. In a system working in such a manner, a content is to be searched, a location of which is identified, and accessed by specifying a title of content or a keyword of the content. In this method, there is no way of obtaining a list of all of titles of contents. Consequently, the user cannot scan the title list to choose and access a desired content from the title list. Therefore, a method of efficiently managing and updating shared information such as a title list and a keyword list has been demand.

The present invention has been achieved in consideration of the problems and an object of the invention is to provide a node apparatus, a shared information updating method, a shared information storing method, a shared information updating process program, and a shared information storing process program capable of efficiently obtaining shared information in the latest state at any time without providing a management server as described above.

### Means for Solving the Problems

To solve that problems, the invention according to a first aspect described in claim 1 provides a node apparatus in an information distribution system having a plurality of node apparatuses connected to each other via a network, comprising: a shared information memory means for memorizing first shared information to be commonly used by the plurality of node apparatuses; an identification information generating means for generating unique identification information corresponding to the first shared information on the basis of the first shared information; a node apparatus identifying means for identifying a node apparatus as a management source of the first shared information on the basis of the generated first identification information; an update information obtaining means for obtaining update information corresponding to the first shared information from the identified node apparatus; and a shared information updating means for updating the first shared information memorized in the shared information memory means to second shared information on the basis of the obtained update information.

According to the invention described in claim 1, each of the node apparatuses identifies the management source of the first shared information on the basis of unique identification information corresponding to the first shared information, obtains the update information corresponding to the first shared information from the management source, and updates the first shared information to second shared information. Consequently, without providing a management server, shared information held by the node apparatus itself can be efficiently updated, so that the shared information in the latest state can be efficiently obtained. Thus, the management cost for the management of lists by the management server can be reduced.

The invention described in claim 2 provides the node apparatus according to the first aspect, wherein the shared information updating means determines whether the first shared information is updated or not in the node apparatus as the management source of the first shared information on the basis of the obtained update information and, in the case where the first shared information is updated, updates the first shared information memorized in the shared information memory means to the second shared information.

According to the invention described in claim 2, each node apparatus can know whether the first shared information has been updated or not and, in the case where the first shared information has been updated, efficiently update shared information held by itself.

The invention described in claim 3 provides the node apparatus according to the second aspect, wherein when the first shared information is updated to second shared information, the identification information generating means generates unique second identification information corresponding to the second shared information on the basis of the second shared information, the node apparatus identifying means identifies a node apparatus as the management source of the second shared information on the basis of the generated second identification information, the update information obtaining means obtains update information corresponding to the second shared information from the identified node apparatus, and the shared information updating means determines whether the second shared information has been updated or not in the node apparatus as the management source of the second shared information on the basis of the obtained update information and, in the case where the second shared information has been updated, updates the second shared information memorized in the shared information memory means to third shared information.

According to the invention described in claim 3, the update information corresponding to the first shared information is managed by the node apparatus as the management source of the first shared information, and the update information corresponding to the second shared information is managed by the node apparatus as the management source of the second shared information. In such a manner, management sources of shared information at update stage are distributed. Accordingly, when each of node apparatuses updates shared information, concentration of the network load in one place can be avoided. Since each of the node apparatuses is arranged to gradually update shared information held by itself, the shared information held by itself can be updated more efficiently. Thus, the shared information in the latest state can be efficiently obtained.

The invention described in claim 4 provides the node apparatus according to any one of the first aspect to the third aspect, wherein the update information is the second shared information after update.

The invention described in claim 5 provides the node apparatus according to any one of the first aspect to the third aspect, wherein the update information is partial information corresponding to an update part in the first shared information updated in the node apparatus as the management source of the first shared information.

According to the invention described in claim 5, the update information is partial information corresponding to the updated part of the first shared information, so that the data amount can be decreased. Therefore, the network load can be reduced.

The invention described in claim 6 provides the node apparatus according to the first aspect, wherein the identification information generating means, when the shared information is updated, generates unique identification information corresponding to the shared information on the basis of the shared information before update; the node apparatus identifying means for identifying a node apparatus as a management source of the shared information on the basis of the generated identification information; and the node apparatus further comprising a shared information storing means for making the identified node apparatus store update information corresponding to the shared information before update.

According to the invention described in claim 6, by storing update information corresponding to shared information before update to a node device as a management source of shared information, each node apparatus can efficiently update shared information held by itself. Thus, the shared information in the latest state can be obtained efficiently without providing the management server. Therefore, the management cost for the management server can be reduced.

The invention described in claim 7 provides the node apparatus according to the sixth aspect, wherein the update information is shared information after update.

The invention described in claim 8 provides the node apparatus according to the sixth aspect, wherein the update information is partial information corresponding to an update part in the shared information before update.

The invention described in claim 9 provides the node apparatus according to any one of the first aspect to the eighth aspect, wherein the identification information generating means generates the identification information as a hash value by processing the shared information with a predetermined hash function.

The invention described in claim 10 provides the node apparatus according to any one of the first aspect to the ninth aspect, the node apparatus identifying means transmits the identification information to any one of the plurality of node apparatuses and, on the basis of information indicative of a node apparatus as the management source sent from any one of the plurality of node apparatuses, identifies the node apparatus.

The invention described in claim 11 provides the node apparatus according to any one of the first aspect to the tenth aspect, wherein distribution information, to be distributed from one of the node apparatuses to another node apparatus, is distributed and stored in the plurality of node apparatuses, and wherein the shared information is list information, in which information of the distribution information distributed and stored is described.

The invention according to a twelfth aspect described in claim 12 provides a shared information updating method in a node apparatus in an information distribution system having a plurality of node apparatuses connected to each other via a network, comprising: a step of generating unique identification information corresponding to first shared information on the basis of the first shared information to be commonly used by the plurality of node apparatuses; a step of identifying a node apparatus as a management source of the first shared information on the basis of the generated first identification information; a step of obtaining update information corresponding to the first shared information from the identified node apparatus; and a step of updating the first shared information to second shared information on the basis of the obtained update information.

The invention described in claim 13 provides the shared information updating method according to the twelfth aspect, wherein in the step of generating unique identification information, when shared information to be commonly used by the plurality of node apparatuses is updated, unique identification information is generated corresponding to the shared information on the basis of the shared information before update; in the step of identifying, a node apparatus is identified as a management source of the shared information on the basis of the generated identification information; and the shared information updating method further comprises a step of making the identified node apparatus to store update information corresponding to the shared information before update.

The invention described in claim 14 provides a shared information updating process program for making a computer, included in a node apparatus in an information distribution system having a plurality of node apparatuses connected to each other via a network, function as the node apparatus according to the first aspect.

The invention described in claim 15 provides a shared information updating process program for making a computer, included in a node apparatus in an information distribution system having a plurality of node apparatuses connected to each other via a network, function as the node apparatus according to the sixth aspect.

The invention described in claim 16 provides a recording medium in which the shared information updating process program according to the fourteenth aspect is computer-readably recorded.

The invention described in claim 17 provides a recording medium in which the shared information storing process program according to the fifteenth aspect is computer-readably recorded.

The invention described in claim 18 provides a node apparatus according to the first aspect, wherein the information distribution system includes node apparatuses as management sources of different shared information from each other at respective update stages, the shared information memory means memorizes shared information at any of the update stages; the node apparatus identifying means performs a identifying process of identifying a node apparatus as a management source of shared information stored in the shared information memory means; the update information obtaining means performs an obtaining process of obtaining update information corresponding to the shared information memorized in the shared information memory means from the identified node apparatus; and the shared information updating means performs an updating process of updating the shared information memorized in the shared information memory means on the basis of the obtained update information.

The invention described in claim 19 provides the node apparatus according to the eighteenth aspect, wherein the identifying process by the node apparatus identifying means, the obtaining process by the update information obtaining means, and the updating process by the shared information updating means are repeated until shared information memorized in the shared information memory means becomes the latest state.

According to the invention described in the nineteenth aspect shared information in the latest state can be always obtained efficiently without providing the management server.

### EFFECTS OF THE INVENTION

According to the present invention, each of node apparatuses identifies a management source of first shared information on the basis of unique identification information corresponding to the first shared information, obtains update information corresponding to the first shared information from the management source, and updates the first shared information to second shared information. Consequently, shared information held by the node apparatus itself can be efficiently updated without providing a management server, accordingly the shared information in the latest state can be efficiently obtained.

### BRIEF DESCRIPTION OF THE DRAWINGS

FIG. 1 is a diagram showing an example of a connection mode of node apparatuses in a content distribution system according to an embodiment;
FIG. 2 is a diagram showing an example of a state in which a node apparatus 1 storing content data is searched by using a DHT;
FIG. 3 is a diagram showing an example of a schematic configuration of the node apparatus 1;
FIG. 4 is a flowchart showing a main routine of a keyword list storing process in a controller 11 of the node apparatus 1;
FIG. 5 is a flowchart showing a subroutine of the keyword list storing process in the controller 11 of the node apparatus 1;
FIG. 6 is a flowchart showing a subroutine of the keyword list storing process in the controller 11 of the node apparatus 1;
FIG. 7 is a conceptual diagram showing a state where content data, keyword lists, and the like are stored in a keyword list storing process.
FIG. 8 is a flowchart showing a keyword list updating process in the controller 11 of the node apparatus 1; and
FIG. 9 is a conceptual diagram showing a state of updating a keyword list and the like performed in the keyword list updating process.

### DESCRIPTION OF REFERENCE NUMERALS

- 1: node apparatus
- 8: network
- 11: controller
- 12: memory
- 13: buffer memory
- 14: decoder
- 15: image processor
- 16: display
- 17: sound processor
- 18: speaker
- 19: encoder
- 20: communication unit
- 21: input unit
- 22: bus
- S: content distribution system

### BEST MODE FOR CARRYING OUT THE INVENTION

The best mode of the present invention will be described hereinbelow with reference to the drawings. In the following embodiment, the present invention is applied to a content distribution system.

### [1. Configuration and the like of Content Distribution System]

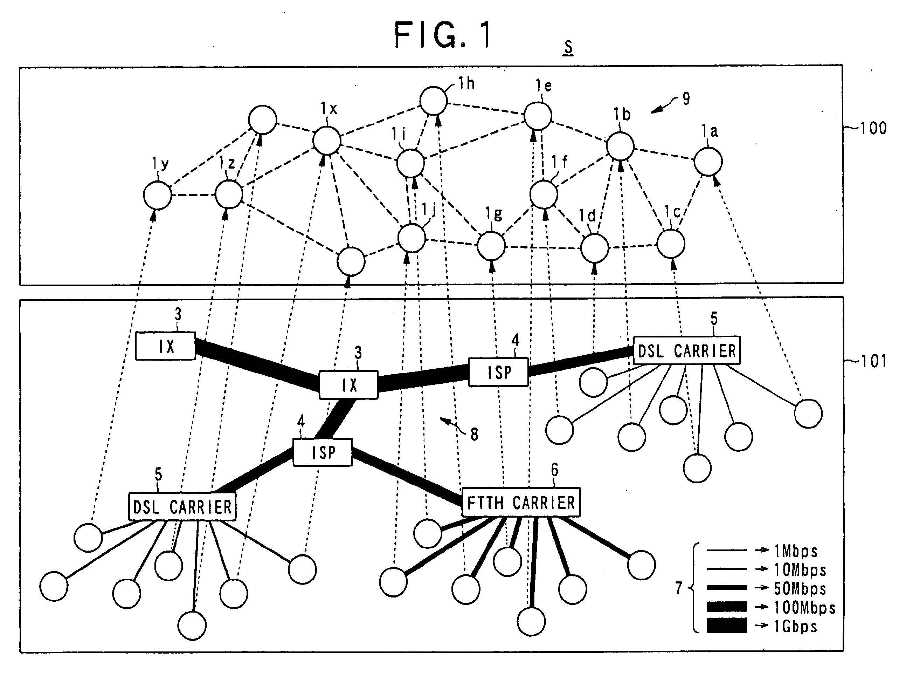

First, referring to FIG. 1, a schematic configuration and the like of a content distribution system as an information distribution system will be described.

FIG. 1 is a diagram showing an example of a connection mode of node apparatuses in a content distribution system according to the embodiment.

As shown in a lower frame 101 in FIG. 1, a network (network in the real world) 8 such as the Internet is configured with an IX (Internet exchange) 3, an ISP (Internet Service Provider) 4, (an apparatus of) a DSL (Digital Subscriber Line) carrier 5, (an apparatus of) an FTTH (Fiber To The Home) carrier 6, a communication line (such as telephone line or optical cable) 7, and the like.

The content distribution system S is configured with a plurality of node apparatuses 1a, 1b, 1c, ..., 1x, 1y, 1z, ... connected to each other via such the network 8, and is a peer-to-peer network system. To each of the node apparatuses 1a, 1b, 1c, ..., 1x, 1y, 1z, ..., unique serial number and IP (Internet Protocol) address as information indicative of the node apparatus are assigned. The serial number and IP address are unique among the plurality of node apparatuses 1. In the following description, in the case of referring to any of the node apparatuses la, 1b, 1c, ..., 1x, 1y, 1z, ..., it may be called as a node apparatus 1 for convenience.

In the content distribution system S, an overlay network 9 as shown in an upper frame 100 in FIG. 1 is configured by a specific algorithm, for example, an algorithm using a distribute hash table (hereinbelow, called DHT) which will be described later. Specifically, the overlay network 9 denotes a network forming a virtual link formed by using the existing network 8.

The embodiment is carried out on the precondition that the overlay network 9 constructed by the algorithm using the DHT is employed. The node apparatus 1 disposed on the overlay network 9 is called a node apparatus 1 participating in the content distribution system S (in other words, participating in the overlay network 9). A node apparatus, which is not participated in the content distribution system S, participates in the system by sending a participation request to an arbitrary node apparatus 1 which is already participated in the system.

A node ID of each of the node apparatuses 1 participated in the content distribution system S is, for example, a value obtained by hashing the IP address or serial number with a common hash function. The node IDs are disposed so as to be evenly distributed in one ID space. The probability that the node IDs obtained with the common hash function (hashed node ID) become the same value is extremely low when the IP addresses or serial numbers are different. Since the hash function is known, its detailed description will not be given. In the embodiment, a value obtained by hashing an IP address (global IP address) with a common hash function is used as a node ID.

In the plurality of node apparatuses 1 participated in the content distribution system S, contents (for example, movies, music, and the like) data as distribution information, to be distributed from one node apparatus 1 to another node apparatus 1 ,is distributed and stored. For example, content data of a movie whose title is XXX is stored in the node apparatus 1a and content data of a movie whose title is YYY is stored in the node apparatus 1b. In such a manner, content data different from each other is distributed and stored in the plurality of node apparatuses 1 (there is also a case that the same content data is distributed and stored in the plurality of node apparatuses 1).

Any content data may be stored in any node apparatus 1. For example, a keyword (such as a name of content (content title) or outline information (synopsis) of content) as an example of information of content data is hashed with the same hash function as that used when obtaining the node ID (that is, keywords are disposed in the same ID space as that of the hash values of the IP addresses of the node apparatuses 1). The content data is stored in the node apparatus 1 having the node ID closest to the hash value (for example, the digits in upper-order match the most). In such a manner, content data can be evenly distributed in the content distribution system S. There may be a case that different content data have the same keyword (for example, the same contents title) and in this case, these contents have the same hash values. To avoid the situation, a keyword to be hashed may be formed with, for example, combination of a content title and copyright information (such as performer name, director name, original writer name, singer name, composer name, lyric writer name, or the like).

The location of content data distributed and stored is stored partly in each of the node apparatuses 1 using DHTs. By using these DHTs, the location of the content data, that is, the node apparatus 1 as a storage source can be searched (found). In a DHT, for example, a plurality of pieces of path information to another node apparatus, that is, node ID (hash value) and IP address of another node apparatus properly apart in the node ID space are registered.

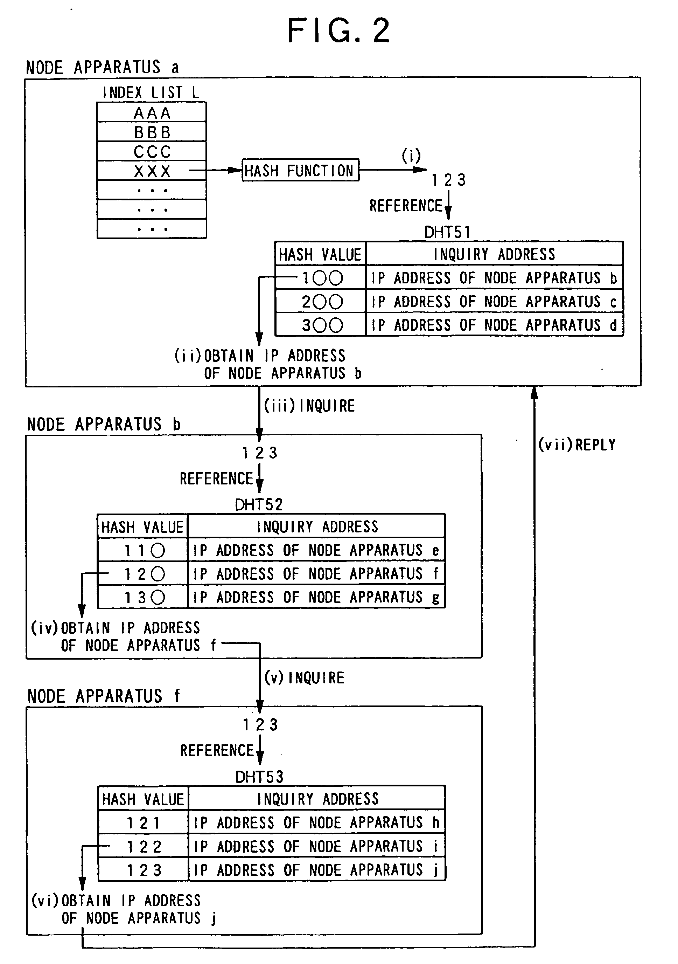

An example of a method of searching a node apparatus 1 as a storage source of content data will be described with reference to FIG. 2.

FIG. 2 is a diagram showing an example of a state where a node apparatus 1 as a storage source of content data is searched by using DHTs.

For example, as shown in FIG. 2, in the case where the node apparatus 1a searches content data X, whose keyword described in a keyword list L as list information to be described later, is "XXX", the node apparatus 1a obtains a hash value by processing the keyword "XXX" with the same hash function as that of used for obtaining the node ID (hereinbelow, it is assumed that the hash value is "123") (FIG. 2(i)). The hash value of the keyword "XXX" may be described in the keyword list L in association with the keyword "XXX".

Next, the node apparatus 1a obtains the IP address of the node apparatus 1b associated with the value "1" of the first digit in upper-order of the hash value "123" of the keyword with reference to a DHT (in other words, a network path table) 51 held by itself (FIG. 2(ii)), and inquires by transmitting inquiry information including the hash value "123" and the IP address of the node apparatus 1a to the node apparatus 1b (FIG. 2(iii)).

If the IP address of the node apparatus 1a is associated with the hash value "123" of the keyword in the DHT 51 held in the node apparatus la, the node apparatus 1a is the storage source of the content data.

The node apparatus 1b receives the inquiry information, obtains the IP address of the node apparatus 1f associated with the numerical value "2" of the second digit in upper-order of the hash value "123" of the keyword with reference to a DHT 52 held by itself (FIG. 2(iv)), and inquires by transmitting inquiry information including the hash value "123" and the IP address of the node apparatus 1a to the node apparatus 1f (FIG. 2(v)).

The node apparatus 1f receives the inquiry information, obtains the IP address of the node apparatus 1j associated with the numerical value "3" of the third digit in upper-order of the hash value "123" of the keyword with reference to a DHT 53 held by itself as the IP address of a node apparatus 1 storing the content data X of the keyword "XXX" (FIG. 2(vi)). The node apparatus 1f responds to the node apparatus 1a with the IP address (FIG. 2(vii)).

The node apparatus 1a thus receives the IP address of the node apparatus 1j, then searches the node 1j as the location of the content data X of the keyword "XXX", that is, the storage source, and obtains (downloads) the content data X from the node apparatus 1j.

In the keyword list L, keywords of a plurality of content data distributed and stored in the content distribution system S are described. With the keyword list L, the user of each of the node apparatuses 1 can grasp content data stored, in other words, content data to be viewed.

Therefore, the keyword list L can be also said as shared information that is commonly used by all of the node apparatuses 1 and has to be always in the latest state.

In the embodiment, by searching the update information of the keyword list L by using the keyword list L before update, without providing a server for managing the keyword list L in an centralized manner, each of the node apparatuses 1 can efficiently obtain the keyword list L in the latest state any time. The details of this method will be described later.

### [2. Configuration of Node Device and the like]

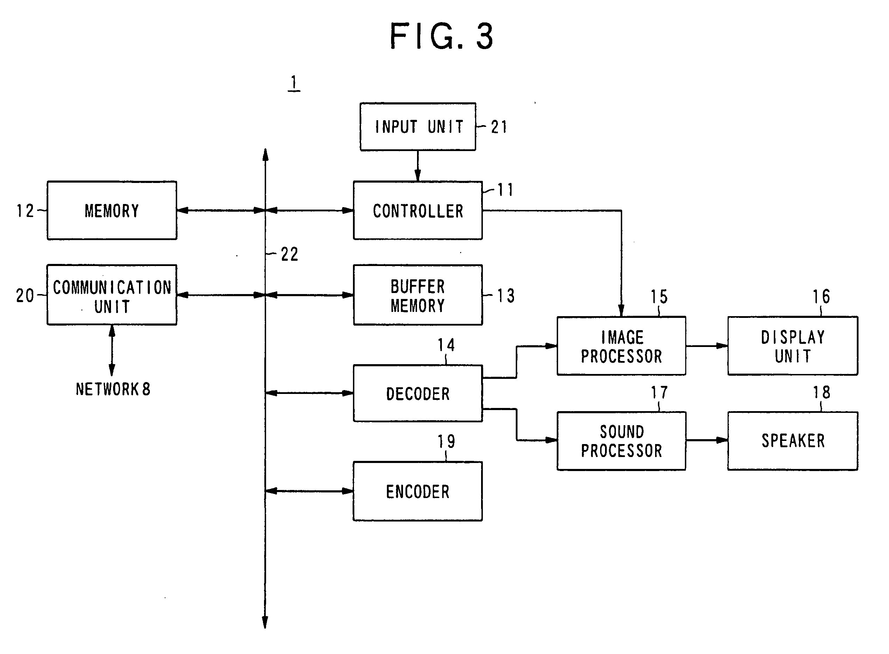

Referring now to FIG. 3, the configuration and function of the node apparatus 1 will be described.

FIG. 3 is a diagram showing an example of a schematic configuration of the node apparatus 1.

As shown in FIG. 3, each of the node apparatuses 1 includes: a controller 11 as a computer configured with a CPU having a computing function, a working RAM, a ROM for storing various data and a program, and the like; a memory 12 as a shared information memory means configured with an HDD or the like for storing the content data, the keyword list L, the DHT, a program, and the like (some node apparatuses 1 do not store the content data); a buffer memory 13 for temporarily storing received content data, a decoder 14 for decoding (data-decompressing, deciphering, or the like) encoded video data (video information), audio data (audio information), and the like which is included in the content data; a video processor 15 for performing predetermined drawing process on the decoded video data or the like and outputting the processed data as a video signal; a display unit 16 such as a CRT, a liquid crystal display, or the like for displaying vide data on the basis of the video signal output from the video processor 15; a sound processor 17 for D/A (Digital/Analog) converting the decoded audio data to an analog audio signal, amplifying the analog audio signal by an amplifier, and outputting the amplified signal; a speaker 18 for outputting the audio signal output from the sound processor 17 as a sound wave; an encoder 19 for encoding (data-compressing, ciphering, or the like) video data, audio data, and the like included in the content data; a communication unit 20 for controlling communication of information with another node 1 via the network 8; and an input unit (for example, a keyboard, a mouse, an operation panel, or the like) 21 for accepting an instruction from the user and supplying an instruction signal according to the instruction to the controller 11. The controller 11, memory 12, buffer memory 13, decoder 14, encoder 19, and communication unit 20 are connected to each other via a bus 22.

The CPU in the controller 11 executes various programs memorized in the memory 12 or the like, thereby controlling the whole node apparatus 1 in a centralized manner and performs a keyword list storing (registering) process, a keyword list updating process, and the like in response to the instruction signal from the input unit 21. The keyword list storing (registering) process and the keyword list updating process will be described later.

### [3. Operation of Content Distribution System]

Next, the operation of the content distribution system S will be described.

### (Keyword List Storing Process)

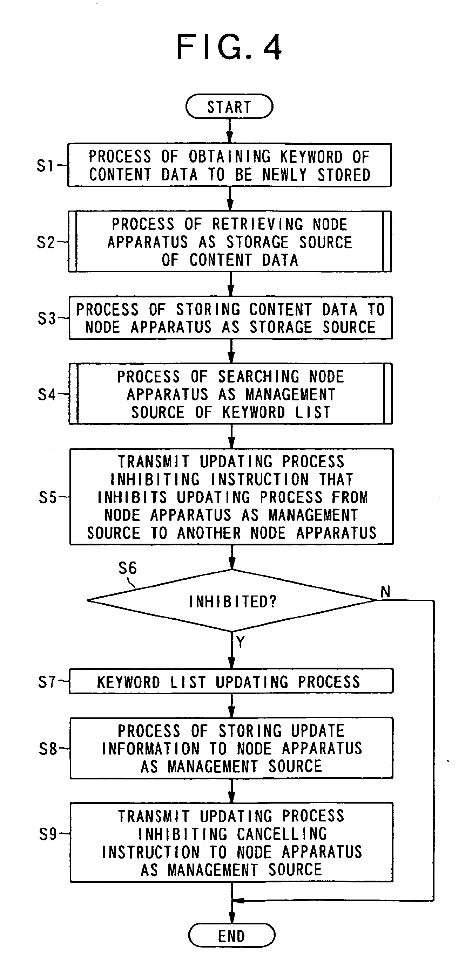

First, the keyword list storing process will be described with reference to FIGS. 4 to 7.

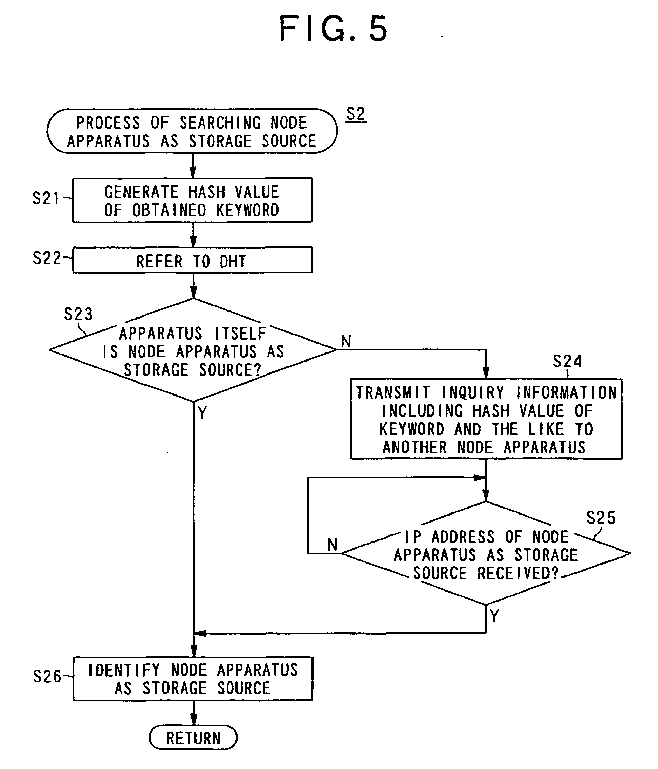

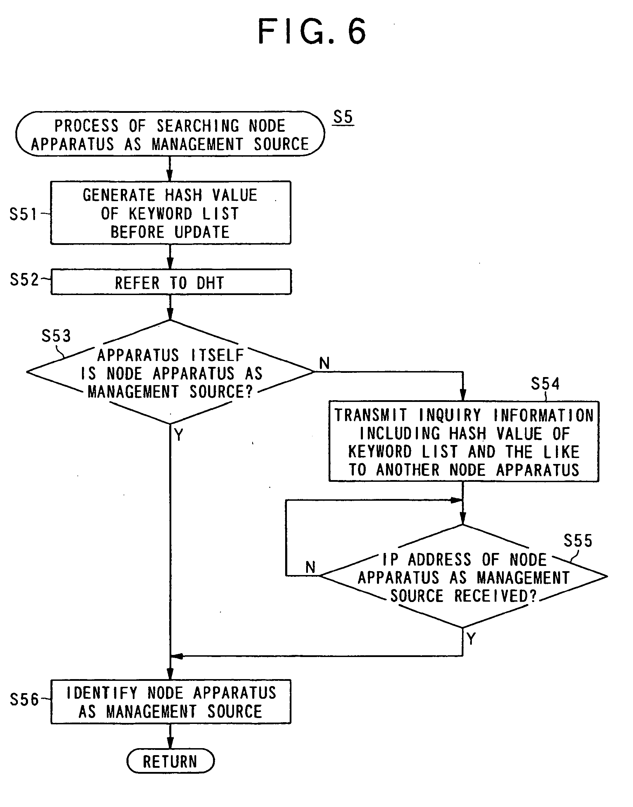

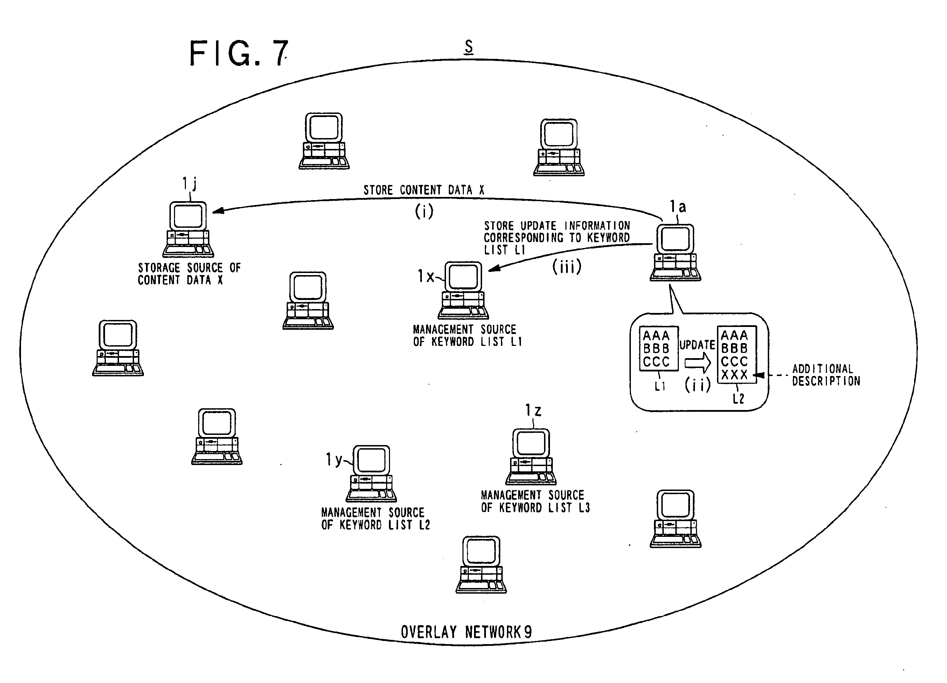

FIG. 4 is a flowchart showing the main routine of the keyword list storing process in the controller 11 of the node apparatus 1. FIGS. 5 and 6 are flowcharts each showing a subroutine of the keyword list storing process. FIG. 7 is a conceptual diagram showing a state of storage of content data, storage of a keyword list, and the like performed in the keyword list storing process.

The processes shown in FIGS. 4 to 6 are performed when a shared information storing process program memorized in the memory 12 or the like is executed by the controller 11.

In the processes shown in FIG. 4, when a request for storing content data X obtained by the user (for example, read from a removable information recording medium) in the node apparatus 1 for registering content data (for example, the node apparatus 1a shown in FIG. 7) is made (for example, when the user operates the input unit 21), the controller 11 obtains a keyword (such as a name of the content (content title)) of content data X to be newly stored (step S1). It is assumed that each of all of the node apparatuses 1 memorizes, as an initial value, a keyword list L 1 in the memory 12.

In the obtaining process, for example, the controller 11 may obtain a keyword from data added to the content data X or may obtain a keyword entered by an operation on the input unit 21 of the user.

Subsequently, the controller 11 performs a process of searching the node apparatus 1 to be a storage source of the content data X (step S2).

Specifically, first, the controller 11 generates a hash value by processing the obtained keyword with the same hash function as that used for obtaining the node ID as shown in FIG. 5 (step S21).

After that, the controller 11 refers to a DHT (step S22) and determines whether the apparatus itself is a node apparatus 1 to be a storage source of the content data X or not (step S23). When the controller 11 determines that the apparatus itself is not the node apparatus 1 as the storage source (for example, when the IP address of the apparatus itself is not associated with the hash value of the keyword in the DHT) (N in step S23), the controller 11 transmits the inquiry information including the hash value of the keyword and the IP address of the apparatus itself to another node apparatus 1 (step S24). When the controller 11 receives the IP address of a node apparatus 1j to be a storage source, which is sent in response to the inquiry information (Y in step S25), the controller 11 identifies the node apparatus 1j to be a storage source on the basis of the IP address (step S26).

When the inquiry information is transmitted to another node apparatus 1 in step S24, the processes are performed in the same flow as that in the searching method described above with reference to FIG. 2 (FIG. 2(iv) to FIG. 2(vii)) and, finally, the IP address of the node apparatus 1j to be the storage source is sent back.

On the other hand, when the controller 11 determines in step S23 that the apparatus itself is a node apparatus to be the storage source (Y in step S23), identifies the node apparatus 1a itself as the node apparatus to be the storage source (step S26).

Next, returning to the processes shown in FIG. 4, the controller 11 performs a process of storing the content data X to the node apparatus 1 to be the storage source (step S3). More specifically, in the case where the node apparatus 1 identified in the step S26 is not the apparatus itself, the controller 11 transmits the content data X obtained in the step S 1 to the node apparatus 1j to be the storage source on the basis of the IP address received in the step S25 via the communication unit 20 and the network 8 as shown in FIG. 7(i) so that the content is stored in the apparatus 1j. On the other hand, in the case where the node apparatus 1 identified in the step S26 is the apparatus itself, the controller 11 memorizes and stores the content data X obtained in the step S 1 in the memory 12 of the node apparatus 1a to be the storage source.

Subsequently, the controller 11 performs the process of searching the node apparatus 1 as the management source of the keyword list L1 (step S4).

Specifically, the controller 11 as an identification information generating means, first, as shown in FIG. 6, generates a hash value (an example of unique identification information corresponding to the keyword list L1) by processing the keyword list L1 before update (for example, a character string described in the keyword list) with the same hash function as that used for obtaining the node ID (step S51).

After that, the controller 11 as a node apparatus identifying means identifies the node apparatus 1 as the management source of the keyword list L1 on the basis of the generated hash value. For example, the controller 11 refers to a DHT (step S52) and determines whether the apparatus itself is a node apparatus 1 as the management source or not (step S53). When the controller 11 determines that the apparatus itself is not the node apparatus 1 as the management source (for example, when the IP address of the apparatus itself is not associated with the hash value in the keyword list L1) (N in step S53), the controller 11 transmits the inquiry information including the hash value of the keyword list L1 and the IP address of the apparatus itself to another node apparatus 1 (step S54). When the controller 11 receives the IP address of a node apparatus 1x as the management source of the keyword list L1 sent in response to the inquiry information (Y in step S55), the controller 11 identifies the node apparatus 1x as the management source on the basis of the IP address (step S56).

When the inquiry information is transmitted to another node apparatus 1 also in step S54, like in the step S24, the processes are performed in the same flow as that in the searching method described above with reference to FIG. 2 (FIG. 2(iv) to FIG. 2(vii)) and, finally, the IP address of the node apparatus 1x as the management source is sent back.

On the other hand, when the controller 11 determines in step S53 that the apparatus itself is the node apparatus 1 as the management source (Y in step S53), the node apparatus 1a of itself is identified as the node apparatus 1 as the management source (step S56).

Next, returning to the processes shown in FIG. 4, the controller 11 transmits an updating process inhibiting instruction, for inhibiting the updating process from another node apparatus 1, to the node apparatus 1 as the management source of the specified keyword list L 1 via the communication unit 20 and the network 8 (step S5). In the node apparatus 1 as the management source that has received the updating process inhibiting instruction, in the case where the updating process from another node apparatus 1 has been already performed (for example, in the case where a write inhibit flag is set), information, indicating that the updating process inhibiting instruction of the node apparatus 1a cannot be accepted because another node apparatus 1 is performing writing operation, is transmitted to the node apparatus 1a. On the other hand, in the case where the updating process from another node apparatus 1 has not been performed (for example, in the case where the write inhibit flag is not set), the controller 11 sets the write inhibit flag, and sends information, indicating that the updating process inhibiting instruction of the node apparatus 1a is accepted, to the node apparatus 1a.

The controller 11 of the node apparatus 1a receives the information (information whether the updating process inhibiting instruction is accepted or not) sent from the node apparatus 1 as the management source, and determines whether the write inhibition could be set or not (step S6). In the case where the write inhibition could not be set (that is, the information, indicating that the updating process inhibiting instruction was not accepted, is received) (N in step S6), the controller 11 finishes the process. On the other hand, in the case where the write inhibition could be set (that is, the information, indicating that acceptance of the updating process inhibiting instruction is received) (Y in step S6), the controller 11 goes to step S7.

In step S7, the controller 11 performs an updating process of updating the keyword list L1 memorized in the memory 12 to a keyword list L2. More specifically, the controller 11 reads the keyword list L1 from the memory 12, generates a new keyword list L2 by adding the keyword "XXX" of the obtained content data X to the keyword list L1 as shown in FIG. 7(ii), and memorizes the keyword list L2 in the memory 12.

Next, the controller 11 as a shared information storing means performs a storing process of making the node apparatus 1, as the management source of the specified keyword list L1, store update information corresponding to the keyword list L1 before update (step S8).

More specifically, in the case where the node apparatus 1 identified in the step S56 is not the apparatus itself, on the basis of the IP address received in step S55, the controller 11 transmits the update information corresponding to the keyword list L2 in the step S 1 to the node apparatus 1x as the management source via the communication unit 20 and the network 8 as shown in FIG. 7(iii) so that the update information is stored in the node apparatus 1x, and finishes the process. On the other hand, when the node apparatus 1 identified in the step S56 is the apparatus itself, the controller 11 stores the update information corresponding to the keyword list L2 in the memory 12 of itself as the node apparatus 1a as the management source.

The update information corresponding to the keyword list L2 may be the whole keyword list L2 or partial information corresponding to an update part of the keyword list L1 before update (for example, a keyword added to the keyword list L1). In the case where the update information corresponding to the keyword list L2 is the whole keyword list L2, the keyword list L1 may be rewritten (overwritten) to the keyword list L2.

In the case where the keyword list storing process is performed, the keyword list L1 is updated to the keyword list L2, and a new content data storing request is made again in the node apparatus 1a for registering content data, a process similar to the above is performed. In this case, by adding a keyword of new content data to the keyword list L2, the keyword list L2 is updated to a keyword list L3, and update information corresponding to the keyword list L3 is stored in the node apparatus 1y as the management source of the keyword list L2.

In such a manner, the keyword list is updated from an old version to a new version. In association with the updating, update information is stored in the node apparatuses 1x, 1y, and 1z, for example, as the management sources of the keyword lists of updating stages L1, L2, and L3, respectively. The hash values of the keyword lists of updating stages L1, L2, and L3, For example, are different from each other (because the character strings described in the keyword lists are different from each other), so that the node apparatuses 1x, 1y, and 1z as the management sources of them are also different from each other.

Although any node apparatus 1 may be used as the management source of the keyword list of each of updating stages, it is more desirable to determine the node apparatus 1 from the relation between the hash values of the node ID and the keyword list. Specifically, a method of using a node apparatus 1 having the node ID of the hash value closest to the hash value of the keyword list (for example, the digits in upper-order match the most), as the management source of the keyword list, can be mentioned.

The objects to be hashed with respect to the keyword lists L1, L2, and L3 are not limited to character strings described in the keyword lists but may be any of information capable of distinguishing the keyword lists L1, L2, and L3 from each other (for example, list names (preferably, names including the update date and time or the like) added to each of the lists).

As described above, after the update information storing process is finished, the controller 11 transmits an updating process inhibition canceling instruction to the node apparatus 1x as the management source via the communication unit 20 and the network 8 (step S9), and finishes the process. Thus, in the node apparatus 1x as the management source, the write inhibition flag is reset.

### (Keyword List Updating Process)

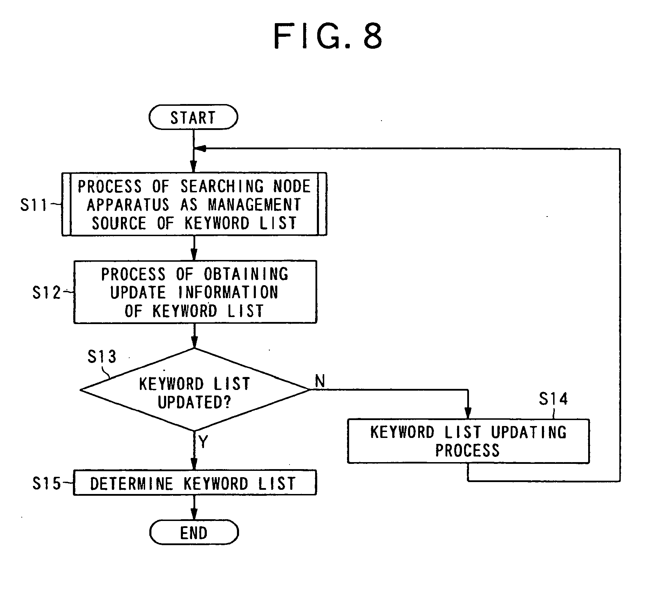

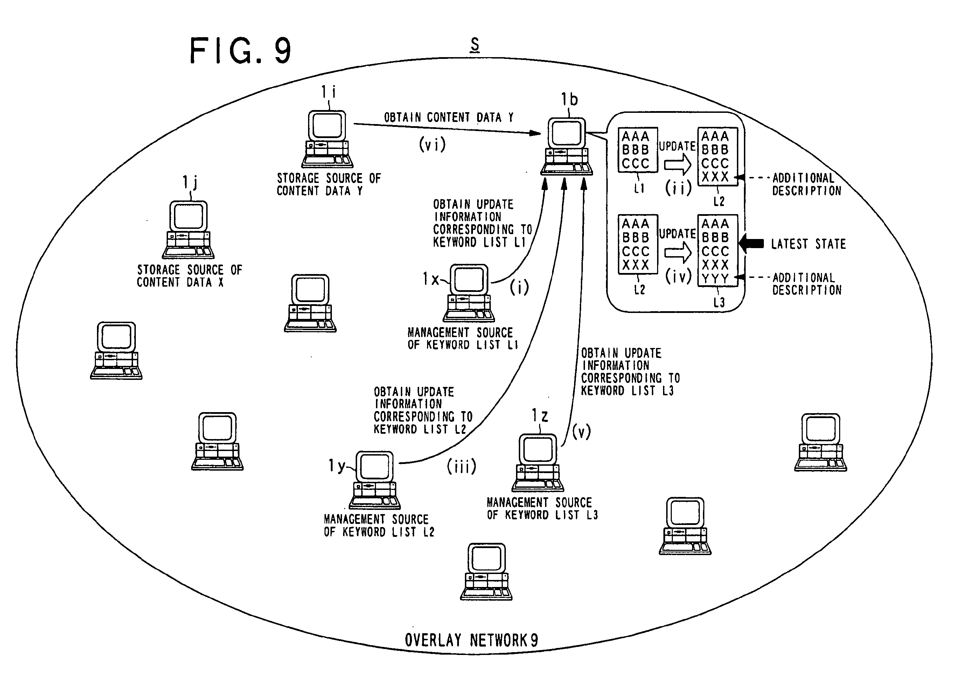

Next, with reference to FIGS. 8 and 9 and the like, the keyword list updating process will be described.

FIG. 8 is a flowchart showing the keyword list updating process in the controller 11 of the node apparatus 1. FIG. 9 is a conceptual diagram showing a state of updating a keyword list or the like performed in the keyword list updating process. The process shown in FIG. 8 is performed when a shared information updating process program memorized in the memory 12 or the like is executed by the controller 11. The shared information updating process program may be downloaded from a predetermined server on the network 8, for example. Alternatively, the shared information updating process program may be recorded on a recording medium such as a CD-ROM , for example, and read via a drive of the recording medium (the shared information storing process program is downloaded or read similarly).

In the following description, the case where the management sources of the keyword lists L1, L2, and L3 are the node apparatuses 1x, 1y, and 1z, respectively in the processes of FIGS. 4 to 6 is assumed.

In the processes shown in FIG. 8, when a keyword list updating request is made in the node apparatus 1 (for example, the node apparatus 1b shown in FIG. 9 (for example, by an operation on the input unit 21 by the user), the controller 11 reads the keyword list L1, for example, memorized in the memory 12 and performs a process of searching the node apparatus 1 as the management source of the keyword list L1 (step S11). Since the process of searching the node apparatus 1 as the management source of the keyword list is similar to that shown in FIG. 6, the description will not be repeated.

When the node apparatus 1x as the management source of the keyword list L1, for example, is identified by the searching process in the step S11, the controller 11 as an update information obtaining means performs an obtaining process for obtaining update information corresponding to the keyword list L1 from the identified node apparatus 1x (step S 12).

More specifically, on the basis of the IP address received in the process shown in FIG. 6, the controller 11 inquires the node apparatus 1x as the management source of the keyword list L1 for update information of the keyword list L1 as shown in FIG. 9(i) and obtains the update information sent from the node apparatus 1x via the network 8 as shown in FIG. 9(i). The update information includes information indicating whether the keyword list L1 is updated or not and, in the case where the keyword list L1 is updated, the update history and information of the portion (difference) of the update part corresponding to the keyword list L1 before update (or the whole keyword list L2 after update). As the update information, by using the portion (difference) of the update part rather than using the whole keyword list L2 after update, the data amount can be reduced so that the network load can be reduced.

The controller 11 as a shared information updating means determines whether the keyword list L1 has been updated or not in the node apparatus 1x as the management source of the keyword list L1 on the basis of the obtained update information (step S13). In the case where the keyword list L1 has been updated (Y in step S13), the controller 11 performs an updating process of updating the keyword list (an example of first shared information) memorized in the memory 12 to the keyword list L1 (an example of second shared information (step S14). More specifically, in the case where the update information includes partial information (for example, the keyword "XXX" to be added) corresponding to the update part in the keyword list L1 before update, as shown in FIG. 9(ii), the keyword "XXX" is added to the keyword list L1 memorized in the memory 12, thereby generating the new keyword list L2. The keyword list L1 memorized in the memory 12 is overwritten with the keyword list L2 and stored. On the other hand, in the case where the update information includes the updated keyword list L2, the keyword list L1 memorized in the memory 12 is overwritten with the keyword list L2 and stored.

After the keyword list updating process is performed, returning to the step S11, the keyword list L2 after update is read from the memory 12, the node apparatus 1 as the management source of the keyword list L2 is searched and the node apparatus 1y as the management source of the keyword list L2, for example, is identified. As shown in FIG. 9(iii), the update information corresponding to the keyword list L2 is obtained from the identified node apparatus 1y, and whether the keyword list L2 has been updated or not in the node apparatus 1y as the management source of the keyword list L2 is determined. In the case where the keyword list L2 has been updated, an updating process of updating the keyword list L2 (an example of the second shared information) memorized in the memory 12 to the keyword list L3 (an example of third shared information) (for example, addition of the keyword "YYY" as shown in FIG. 9(iv) is performed in a manner similar to the above.

Such an updating process is performed until it is determined that the keyword list is not updated in the step S13. For example, as shown in FIG. 9(v), in the case where the update information transmitted from the node apparatus 1z as the management source of the keyword list L3 via the network 8 indicates no update in the keyword list L3, the keyword list L3 is determined as the latest state (step S 15).

After the keyword list in the latest state is determined as described above, the controller 11 displays the keyword list on the display unit 16 via the video processor 15. When the user operates the input unit 21 to select, for example, a desired keyword "YYY" from keywords described in the displayed keyword list in such a display state, the location of the content data Y corresponding to the selected keyword "YYY" is searched as described with reference to FIG. 2. As a result, the IP address of the node apparatus li as the storage source of the content data Y is obtained and, as shown in FIG. 9(vi), the content data Y is obtained (downloaded) from the node apparatus 1i. The obtained content data Y is temporarily stored in the buffer memory 13. Video data or the like included in the content data Y is output via the decoder 14 and the video processor 15 and displayed on the display unit 16. Audio data included in the content data Y is output to the speaker 18 via the decoder 14 and the sound processor 17.

According to the embodiment as described above, the node apparatuses as management sources of the respective keyword lists L1, L2, and L3 at update stages are distributed, and update information corresponding to a keyword list is stored in each of the node apparatuses 1, and each of the node apparatuses 1 accesses the node apparatus of the management source according to the keyword list stored in the apparatus itself to obtain the update information and updates the keyword list. Consequently, the node apparatus can efficiently update the keyword list stored in the apparatus itself without providing the management server, and concentration of the network load in one place at the time of updating the keyword list can be avoided. Since it is unnecessary to provide a management server, the management cost for the management server can be reduced.

Since the keyword lists L1, L2, and L3 are sequentially updated from the old one to become the latest state in the node apparatuses, without providing the management server, the keyword list in the latest state can be efficiently obtained at any time.

By using the hash value of the keyword list and the DHT, each of the node apparatuses as the management sources of the keyword lists at each of the update stages can be identified more efficiently.

In the foregoing embodiment, from the keyword list L1, the keyword list L3 in the latest state is obtained via the keyword list L2 by the processes shown in FIG. 7. As another example, the node apparatus 1 which holds the keyword list L1 may directly obtain the keyword list L3 of the latest state. For example, the node apparatus 1 holding the keyword list L1 may be arranged to obtain the list name of the keyword list L3 in the latest state from any of the node apparatuses 1 participating in the content distribution system S, hash the list name, transmit the resultant to another node 1 and, on the basis of the IP address of the node apparatus 1 as the management source of the keyword list L3 sent back, obtains the update information of the keyword list L3 from the node apparatus 1. More specifically, update date of the keyword list L1 before update is included in keyword list inquiry information. The inquiry information passes through some node apparatuses 1 before it reaches the node apparatus 1 as the management source of the keyword list L 1. In the case where the keyword list L1 is considerably old, the possibility that the node apparatuses 1 through which the inquiry information passes have keyword lists later than the keyword list L1 is high. In the case where the node apparatus 1 through which the inquiry information passes has the keyword list L3 later than the keyword list L1, information (hash value, update date, and the like) of the keyword list L1 in the inquiry information may be rewritten with that of the keyword list L3. After that, an inquiry is made. In such a manner, the inquiry information can reach the node apparatus 1 as the final management source earlier. In this case, no inquiry is sent to the node apparatus 1 as the management source of the keyword list L1 and the node apparatus 1 as the management source of the keyword list L2. Consequently, update information stored in the node apparatus 1 as the management source of the keyword list L3 has to be the whole keyword list L4 itself or partial information (for example, a part added from the keyword list L1 to the keyword list L4 (differential information (L4-L1))).

Although an example of the searching method using the DHT in each of the node apparatuses 1 shown in FIG. 2 has been described in the foregoing embodiment, the invention is not limited to the example. As another example, in the process of searching the node apparatus as the management source shown in FIG. 6 in the foregoing embodiment, whether the node ID of the node apparatus 1 itself is the closest to the hash value of the keyword list (for example, the digits in upper-order match the most) or not is determined in the step S53. In the case where the node ID is the closest to the hash value, the node apparatus 1 is identified to be the node apparatus 1 as the management source. Otherwise, the node apparatus 1 transmits the hash value of the keyword list and the IP address of itself to a node apparatus 1 having the node ID closest to the hash value of the keyword list among the node IDs registered in the DHT (for example, the digits in upper-order match the most) (step S54). In the node apparatus 1 which has received the IP address, similar processes (steps S51 to S54) are performed, and the hash value of the keyword list and the IP address of the node apparatus 1 itself are transmitted (transferred) to another node apparatus 1 until the node apparatus 1 having the node ID closest to the hash value of the keyword list is searched. Finally, the IP address is transmitted from the node apparatus having the node ID closest to the hash value of the keyword list, that is, the node apparatus 1 as the management source. Such a process can be similarly applied also to the case where the node apparatus 1 as the storage source of the content data shown in FIG. 2 is searched.

In the foregoing embodiment, on the precondition that the overlay network 9 constructed by an algorithm using the DHT is employed, a keyword or a keyword list is hashed and, on the basis of a hash value and the DHT, a node apparatus as the storage source of content data or a node apparatus as the management source of the keyword list is identified (found). Alternatively, for example, a node apparatus as the storage source of content data or a node apparatus as the management source of the keyword list may be identified (found) by an algorithm or a function (function find(a numerical value corresponding to a keyword list, for example) = the IP address of the node apparatus 1 as the management source of the keyword list) for performing a predetermined computation by using a keyword or a keyword list (or information accompanying the keyword list).

In the foregoing embodiment, the controller 11 generates a hash value of a keyword list by using a predetermined hash function. The invention however is not limited to the configuration. It is also possible to generate a keyword list ID (which can be discriminated from other keyword list IDs) corresponding to the keyword list on the basis of the keyword list and, on the basis of the keyword list ID, it is possible to identify the node apparatus 1 as the management source of the keyword list.

Although the embodiment has been described by using, for example, a keyword list as shared information to be commonly used by a plurality of node apparatuses 1, the invention is not limited to the embodiment. The invention may be applied to shared data which has to be held commonly by a plurality of users such as a source program to be commonly used by the plurality of node apparatuses 1. In this case as well, a plurality of node apparatuses 1 as management sources of shared data at update stages (versions) exist. By the process (of replacing a keyword list with shared data) shown in FIG. 6, each of the node apparatuses 1 can search (identify) the node apparatus 1 as the management source of shared data after update using the shared data before update.

## Claims

1. A node apparatus for an information distribution system having a plurality of node apparatuses connected to each other via a network, comprising:
a shared information memory means for memorizing first shared information to be commonly used by the plurality of node apparatuses;
an identification information generating means for generating unique identification information corresponding to the first shared information on the basis of the first shared information;
a node apparatus identifying means for identifying a node apparatus as a management source of the first shared information on the basis of the generated first identification information;
an update information obtaining means for obtaining update information corresponding to the first shared information from the identified node apparatus; and
a shared information updating means for updating the first shared information memorized in the shared information memory means to second shared information on the basis of the obtained update information.

2. The node apparatus according to claim 1, wherein
the shared information updating means determines whether the first shared information is updated or not in the node apparatus as the management source of the first shared information on the basis of the obtained update information and, in the case where the first shared information is updated, updates the first shared information memorized in the shared information memory means to the second shared information.

3. The node apparatus according to claim 2, wherein
when the first shared information is updated to second shared information, the identification information generating means generates unique second identification information corresponding to the second shared information on the basis of the second shared information,
the node apparatus identifying means identifies a node apparatus as the management source of the second shared information on the basis of the generated second identification information,
the update information obtaining means obtains update information corresponding to the second shared information from the identified node apparatus, and
the shared information updating means determines whether the second shared information has been updated or not in the node apparatus as the management source of the second shared information on the basis of the obtained update information and, in the case where the second shared information has been updated, updates the second shared information memorized in the shared information memory means to third shared information.

4. The node apparatus according to any one of claims 1 to 3,
wherein the update information is the second shared information after update.

5. The node apparatus according to any one of claims 1 to 3,
wherein the update information is partial information corresponding to an update part in the first shared information updated in the node apparatus as the management source of the first shared information.

6. The node apparatus according to claim 1, wherein
the identification information generating means, when the shared information is updated, generates unique identification information corresponding to the shared information on the basis of the shared information before update;
the node apparatus identifying means identifies a node apparatus as a management source of the shared information on the basis of the generated identification information; and
the node apparatus further comprising
a shared information storing means for making the identified node apparatus store update information corresponding to the shared information before update.

7. The node apparatus according to claim 6, wherein the update information is shared information after update.

8. The node apparatus according to claim 6, wherein the update information is partial information corresponding to an update part in the shared information before update.

9. The node apparatus according to any one of claims 1 to 8, wherein the identification information generating means generates the identification information as a hash value by processing the shared information with a predetermined hash function.

10. The node apparatus according to any one of claims 1 to 9, wherein the node apparatus identifying means transmits the identification information to any one of the plurality of node apparatuses and, on the basis of information indicative of a node apparatus as the management source sent from any one of the plurality of node apparatuses, identifies the node apparatus.

11. The node apparatus according to any one of claims 1 to 10, wherein distribution information, to be distributed from one of the node apparatuses to another node apparatus, is distributed and stored in the plurality of node apparatuses, and
wherein the shared information is list information, in which information of the distribution information distributed and stored is described.

12. A shared information updating method in a node apparatus in an information distribution system having a plurality of node apparatuses connected to each other via a network, comprising:
a step of generating unique identification information corresponding to first shared information on the basis of the first shared information to be commonly used by the plurality of node apparatuses;
a step of identifying a node apparatus as a management source of the first shared information on the basis of the generated first identification information;
a step of obtaining update information corresponding to the first shared information from the identified node apparatus; and
a step of updating the first shared information to second shared information on the basis of the obtained update information.

13. A shared information updating method according to claim 12, wherein
in the step of generating unique identification information, when shared information to be commonly used by the plurality of node apparatuses is updated, unique identification information is generated corresponding to the shared information on the basis of the shared information before update;
in the step of identifying, a node apparatus is identified as a management source of the shared information on the basis of the generated identification information; and
the shared information updating method further comprising
a step of making the identified node apparatus to store update information corresponding to the shared information before update.

14. A shared information updating process program for making a computer, included in a node apparatus in an information distribution system having a plurality of node apparatuses connected to each other via a network, function as the node apparatus according to claim 1.

15. A shared information updating process program for making a computer, included in a node apparatus in an information distribution system having a plurality of node apparatuses connected to each other via a network, function as the node apparatus according to claim 6.

16. A recording medium in which the shared information updating process program according to claim 14 is computer-readably recorded.

17. A recording medium in which the shared information storing process program according to claim 15 is computer-readably recorded.

18. A node apparatus according to claim 1, wherein
the information distribution system includes node apparatuses as management sources of different shared information from each other at respective update stages
the shared information memory means memorizes shared information at any of the update stages;
the node apparatus identifying means performs a identifying process of identifying a node apparatus as a management source of shared information stored in the shared information memory means;
the update information obtaining means performs an obtaining process of obtaining update information corresponding to the shared information memorized in the shared information memory means from the identified node apparatus; and
the shared information updating means performs an updating process of updating the shared information memorized in the shared information memory means on the basis of the obtained update information.

19. The node apparatus according to claim 18, wherein the identifying process by the node apparatus identifying means, the obtaining process by the update information obtaining means, and the updating process by the shared information updating means are repeated until shared information memorized in the shared information memory means becomes the latest state.

## Patentansprüche

1. Netzknotenvorrichtung für ein Informationsverteilungssystem, das eine Vielzahl an Netzknotenvorrichtungen aufweist, die miteinander über ein Netzwerk verbunden sind, aufweisend:
ein Speichermittel für geteilte Information für das Speichern einer ersten geteilten Information, die gemeinsam von der Mehrzahl an Netzknotenvorrichtungen genutzt wird;
ein Identifikations-Informations-Erzeugungsmittel für das Erzeugen einer eindeutigen Identifikations-Information, die der ersten geteilten Information entspricht, auf Basis der ersten geteilten Information;
ein Netzknotenvorrichtungs-Identifikationsmittel für das Identifizieren einer Netzknotenvorrichtung als eine Management-Quelle der ersten geteilten Information auf Basis der erzeugten ersten Identifikations-Information;
ein Mittel zum Abrufen von Aktualisierungsinformation für das Abrufen von Aktualisierungsinformation, die der ersten geteilten Information von der identifizierten Netzknotenvorrichtung entspricht; und
ein Mittel zur Aktualisierung geteilter Information für das Aktualisieren der ersten geteilten Information, die im Speichermittel für geteilte Information gespeichert ist, auf die zweite geteilte Information auf Basis der abgerufenen Aktualisierungsinformation.

2. Netzknotenvorrichtung nach Anspruch 1, wobei
das Mittel zur Aktualisierung geteilter Information bestimmt, ob die erste geteilte Information in der Netzknotenvorrichtung als Management-Quelle der ersten geteilten Information auf Basis der abgerufenen Aktualisierungsinformation aktualisiert wird oder nicht, und in dem Fall, bei dem die erste geteilte Information aktualisiert wird, die erste geteilte Information, die im Speichermittel für geteilte Information gespeichert ist, auf die zweite geteilte Information aktualisiert.

3. Netzknotenvorrichtung nach Anspruch 2, wobei
wenn die erste geteilte Information auf die zweite geteilte Information aktualisiert wird, das Identifikations-Informations-Erzeugungsmittel eine eindeutige zweite Identifikations-Information erzeugt, die der zweiten geteilten Information enspricht, auf Basis der zweiten geteilten Information,
das Netzknotenvorrichtungs-Identifikationsmittel eine Netzknotenvorrichtung als Management-Quelle der zweiten geteilten Information auf Basis der erzeugten zweiten Identifikations-Information identifiziert,
das Mittel zum Erhalt von Aktualisierungsinformation Aktualisierungsinformation erhält, die der zweiten geteilten Information von der identifizierten Netzknotenvorrichtung entspricht, und
das Mittel zur Aktualisierung der geteilten Information bestimmt, ob die zweite geteilte Information in der Netzknotenvorrichtung als Management-Quelle der zweiten geteilten Information auf Basis der abgerufenen Aktualisierungsinformationen aktualisiert wurde oder nicht, und in dem Fall, bei dem die zweite geteilte Information aktualisiert wurde, die zweite geteilte Information, die im Speichermittel für geteilte Information gespeichert ist, auf eine dritte geteilte Information aktualisiert.

4. Netzknotenvorrichtung nach einem der Ansprüche 1 bis 3,
wobei die Aktualisierungsinformation die zweite geteilte Information nach der Aktualisierung ist.

5. Netzknotenvorrichtung nach irgendeinem der Ansprüche 1 bis 3,
wobei es sich bei der Aktualisierungsinformation um eine Teilinformatione handelt, die einem Aktualisierungsteil in der ersten geteilten Information entspricht, die in der Netzknotenvorrichtung als Management-Quelle der ersten geteilten Information aktualisiert wurde.

6. Netzknotenvorrichtung nach Anspruch 1, wobei:
das Identifikations-Informations-Erzeugungsmittel bei der Aktualisierung der geteilten Information eine eindeutige Identifikations-Information erzeugt, die der geteilten Information entspricht, auf Basis der geteilten Information vor der Aktualisierung;
Netzknotenvorrichtungs-Identifikationsmittel eine Netzknotenvorrichtung als eine Management-Quelle der geteilten Information identifiziert auf der Basis der erzeugten Identifikations-Information; und
die Netzknotenvorrichtung weiter aufweist:
ein Speichermittel für geteilte Information, das die identifizierte Netzknotenvorrichtung veranlasst, die Aktualisierungsinformation, die der geteilten Information vor der Aktualisierung entspricht, zu speichern.

7. Netzknotenvorrichtung nach Anspruch 6, wobei die Aktualisierungsinformation eine geteilte Information nach der Aktualisierung ist.

8. Netzknotenvorrichtung nach Anspruch 6, wobei es sich bei den Aktualisierungsinformationen um eine Teilinformation handelt, die einem Aktualisierungsteil in der geteilten Information vor der Aktualisierung entspricht.

9. Netzknotenvorrichtung nach irgendeinem der Ansprüche 1 bis 8, wobei das Identifikations-Informations-Erzeugungsmittel die Identifikations-Information als Hash-Wert erzeugt durch Verarbeitung der geteilten Information mit einer vorbestimmten Hash-Funktion.

10. Netzknotenvorrichtung nach irgendeinem der Ansprüche 1 bis 9, wobei das Netzknotenvorrichtungs-Identifikationsmittel die Identifikations-Information an irgendeine der Vielzahl an Netzknotenvorrichtungen übermittelt und, auf der Basis der eine Netzknotenvorrichtung als Management-Quelle anzeigenden Information, die von irgendeiner von der Vielzahl an Netzknotenvorrichtungen gesendet wurde, die Netzknotenvorrichtung identifiziert.

11. Netzknotenvorrichtung nach irgendeinem der Ansprüche 1 bis 10, wobei die Verteilungsinformation, die von einer der Netzknotenvorrichtungen an eine andere Netzknotenvorrichtung zu verteilen ist, an die Mehrzahl von Netzknotenvorrichtungen verteilt und in ihnen gespeichert wird, und
wobei die geteilte Information Listeninformation ist, in der Information zu der verteilten und gespeicherten Verteilungsinformation beschrieben ist.

12. Verfahren zur Aktualisierung geteilter Information in einer Netzknotenvorrichtung in einem Informationsverteilungssystem, das eine Vielzahl an Netzknotenvorrichtungen aufweist, die miteinander über ein Netzwerk verbunden sind, wobei das Verfahren aufweist:
einen Schritt zur Erzeugung eindeutiger Identifikations-Information, die einer ersten geteilten Information entspricht, auf Basis der ersten geteilten Information, um gemeinsam von der Vielzahl an Netzknotenvorrichtungen genutzt zu werden;
einen Schritt zur Identifikation einer Netzknotenvorrichtung als Management-Quelle der ersten geteilten Information auf Basis der erzeugten ersten Identifikations-Information;
einen Schritt zum Abrufen von Aktualisierungsinformation, die der ersten geteilten Information entspricht, von der identifizierten Netzknotenvorrichtung; und
einen Schritt zur Aktualisierung der ersten geteilten Information auf die zweite geteilte Information auf Basis der abgerufenen Aktualisierungsinformation.

13. Verfahren zur Aktualisierung geteilter Information nach Anspruch 12, wobei:
in dem Schritt zur Erzeugung von eindeutiger Identifikations-Information, eineutige Identifizierungs-Information entsprechend der geteilten Information auf der Basis der geteilten Information vor der Aktualisierung erzeugt wird, wenn die geteilte Information zur gemeinsamen Nutzung durch die Vielzahl an Netzknotenvorrichtungen aktualisiert wird;
in dem Schritt zur identifizierung, eine Netzknotenvorrichtung als Management-Quelle der geteilten Information identifiziert wird auf Basis der erzeugten Identifikations-Information; und
die das Verfahren zur Aktualisierung geteilter Information weiter aufweist:
einen Schritt zum Veranlassen der identifizierten Netzknotenvorrichtung, Aktualisierungsinformation, die der geteilten Information vor der Aktualisierung entspricht, zu speichern.

14. Verarbeitungsprogramm zur Aktualisierung geteilter Information, für das Bewirken, dass ein Computer, der in einer Netzknotenvorrichtung in einem Informationsverteilungssystem mit einer Vielzahl an Netzknotenvorrichtungen, die miteinander über ein Netzwerk verbunden sind, enthalten ist, als eine Netzknotenvorrichtung nach Anspruch 1 arbeitet.

15. Verarbeitungsprogramm zur Speicherung geteilter Information, für das Bewirken, dass ein Computer, der in einer Netzknotenvorrichtung in einem Informationsverteilungssystem mit einer Vielzahl an Netzknotenvorrichtungen, die miteinander über ein Netzwerk verbunden sind, enthalten ist, als die Netzknotenvorrichtung nach Anspruch 6 arbeitet.

16. Speichermedium, auf dem das Verarbeitungsprogramm zur Aktualisierung geteilter Information nach Anspruch 14 computerlesbar gespeichert ist.

17. Speichermedium, auf dem das Verarbeitungsprogramm zur Speicherung geteilter Informatione nach Anspruch 15 computerlesbar gespeichert ist.

18. Netzknotenvorrichtung nach Anspruch 1, wobei
das Informationsverteilungssystem Netzknotenvorrichtungen als Management-Quellen voneinander verschiedener geteilter Informationen zu jeweiligen Aktualisierungsstufen enthält,
das Speichermittel für geteilte Information geteilte Information zu jeder Aktualisierungsstufe speichert,
die Netzknotenvorrichtung ein Identifizierungsverfahren zum Identifizieren einer Netzknotenvorrichtung als eine Management-Quelle der in dem Speichermittel für geteilte Information gespeicherten geteilten Information,
das Mittel zum Abrufen von Aktualisierungsinformation ein Abrufverfahren des Abrufens von Aktualisierungsinformation, die der in dem Speichermittel für geteilte Information gespeicherten geteilten Information entspricht, von der identifizierten Netzknotenvorrichtung, und
das Mittel zur Aktualisierung geteilter Information ein Aktualisierungsverfahren des Aktualisierens der in dem Speichermittel für geteilte Information gespeicherten geteilten Information durchführt auf der Basis der abgerufenen Aktualisierungsinformation.

19. Netzknotenvorrichtung nach Anspruch 18, wobei das Identifikationsverfahren des Netzknotenvorrichtungs-Identifikationsmittels, das Abrufverfahren des Mittels zum Abrufen von Aktualisierungsinformation, und das Aktualisierungsverfahren des Mittels zur Aktualisierung geteilter Information so lange wiederholt werden, bis die in dem Speichermittel für geteilte Information gespeicherte geteilte Information auf dem neuesten Stand ist.

## Revendications

1. Appareil de noeud pour un système de distribution d'informations ayant une pluralité d'appareils de noeud connectés les uns aux autres via un réseau, comprenant :
un moyen de mémoire d'informations partagées pour mémoriser des premières informations partagées devant être utilisées de façon commune par la pluralité d'appareils de noeud ;
un moyen de génération d'informations d'identification pour générer des informations d'identification uniques correspondant aux premières informations partagées sur la base des premières informations partagées ;
un moyen d'identification d'appareil de noeud pour identifier un appareil de noeud comme une source de gestion des premières informations partagées sur la base des premières informations d'identification générées ;
un moyen d'obtention d'informations de mise à jour pour obtenir des informations de mise à jour correspondant aux premières informations partagées à partir de l'appareil de noeud identifié ; et
un moyen de mise à jour d'informations partagées pour mettre à jour les premières informations partagées mémorisées dans le moyen de mémoire d'informations partagées en deuxièmes informations partagées sur la base des informations de mise à jour obtenues.

2. Appareil de noeud selon la revendication 1, dans lequel
le moyen de mise à jour d'informations partagées détermine si les premières informations partagées sont mises à jour ou non dans l'appareil de noeud comme la source de gestion des premières informations partagées sur la base des informations de mise à jour obtenues et, dans le cas où les premières informations partagées sont mises à jour, met à jour les premières informations partagées mémorisées dans le moyen de mémoire d'informations partagées en les deuxièmes informations partagées.

3. Appareil de noeud selon la revendication 2, dans lequel
lorsque les premières informations partagées sont mises à jour en deuxièmes informations partagées, le moyen de génération d'informations d'identification génère des secondes informations d'identification uniques correspondant aux deuxièmes informations partagées sur la base des deuxièmes informations partagées,
le moyen d'identification d'appareil de noeud identifie un appareil de noeud comme la source de gestion des deuxièmes informations partagées sur la base des secondes informations d'identification générées,
le moyen d'obtention d'informations de mise à jour obtient des informations de mise à jour correspondant aux deuxièmes informations partagées à partir de l'appareil de noeud identifié, et
le moyen de mise à jour d'informations partagées détermine si les deuxièmes informations partagées ont été mises à jour ou non dans l'appareil de noeud comme la source de gestion des deuxièmes informations partagées sur la base des informations de mise à jour obtenues et, dans le cas où les deuxièmes informations partagées ont été mises à jour, met à jour les deuxièmes informations partagées mémorisées dans le moyen de mémoire d'informations partagées en troisièmes informations partagées.

4. Appareil de noeud selon l'une quelconque des revendications 1 à 3,
dans lequel les informations de mise à jour sont les deuxièmes informations partagées après la mise à jour.

5. Appareil de noeud selon l'une quelconque des revendications 1 à 3,
dans lequel les informations de mise à jour sont des informations partielles correspondant à une partie de mise à jour dans les premières informations partagées mises à jour dans l'appareil de noeud comme la source de gestion des premières informations partagées.

6. Appareil de noeud selon la revendication 1, dans lequel
le moyen de génération d'information d'identification, lorsque les informations partagées sont mises à jour, génère des informations d'identification uniques correspondant aux informations partagées sur la base des informations partagées avant la mise à jour ;
le moyen d'identification d'appareil de noeud identifie un appareil de noeud comme une source de gestion des informations partagées sur la base des informations d'identification générées ; et
l'appareil de noeud comprenant en outre
un moyen de stockage d'informations partagées pour amener l'appareil de noeud identifié à stocker des informations de mise à jour correspondant aux informations partagées avant la mise à jour.

7. Appareil de noeud selon la revendication 6, dans lequel les informations de mise à jour sont des informations partagées après la mise à jour.

8. Appareil de noeud selon la revendication 6, dans lequel les informations de mise à jour sont des informations partielles correspondant à une partie de mise à jour dans les informations partagées avant la mise à jour.

9. Appareil de noeud selon l'une quelconque des revendications 1 à 8, dans lequel le moyen de génération d'informations d'identification génère les informations d'identification comme une valeur de hachage en traitant les informations partagées avec une fonction de hachage prédéterminée.

10. Appareil de noeud selon l'une quelconque des revendications 1 à 9, dans lequel le moyen d'identification d'appareil de noeud transmet les informations d'identification à l'un quelconque de la pluralité d'appareils de noeud et, sur la base d'informations indicatives d'un appareil de noeud comme la source de gestion envoyées depuis l'un quelconque de la pluralité d'appareils de noeud, identifie l'appareil de noeud.

11. Appareil de noeud selon l'une quelconque des revendications 1 à 10, dans lequel des informations de distribution, devant être distribuées d'un des appareils de noeud à un autre appareil de noeud, sont distribuées et stockées dans la pluralité d'appareils de noeud, et
dans lequel les informations partagées sont des informations de liste, dans lesquelles des informations des informations de distribution distribuées et stockées sont décrites.

12. Procédé de mise à jour d'informations partagées dans un appareil de noeud dans un système de distribution d'informations ayant une pluralité d'appareils de noeud connectés les uns aux autres via un réseau, comprenant :
une étape consistant à générer des informations d'identification uniques correspondant à des premières informations partagées sur la base des premières informations partagées devant être utilisées de façon commune par la pluralité d'appareils de noeud ;
une étape consistant à identifier un appareil de noeud comme une source de gestion des premières informations partagées sur la base des premières informations d'identification générées ;
une étape consistant à obtenir des informations de mise à jour correspondant aux premières informations partagées à partir de l'appareil de noeud identifié ; et
une étape consistant à mettre à jour les premières informations partagées en deuxièmes informations partagées sur la base des informations de mise à jour obtenues.

13. Procédé de mise à jour d'informations partagées selon la revendication 12, dans lequel
à l'étape de génération d'informations d'identification uniques, lorsque des informations partagées devant être utilisées de façon commune par la pluralité d'appareils de noeud sont mises à jour, des informations d'identification uniques sont générées correspondant aux informations partagées sur la base des informations partagées avant la mise à jour ;
à l'étape d'identification, un appareil de noeud est identifié comme une source de gestion des informations partagées sur la base des informations d'identification générées ; et
le procédé de mise à jour d'informations partagées comprenant en outre
une étape consistant à amener l'appareil de noeud identifié à stocker des informations de mise à jour correspondant aux informations partagées avant la mise à jour.

14. Programme de processus de mise à jour d'informations partagées pour amener un ordinateur, compris dans un appareil de noeud dans un système de distribution d'informations ayant une pluralité d'appareils de noeud connectés les uns aux autres via un réseau, à fonctionner comme l'appareil de noeud selon la revendication 1.

15. Programme de processus de mise à jour d'informations partagées pour amener un ordinateur, compris dans un appareil de noeud dans un système de distribution d'informations ayant une pluralité d'appareils de noeud connectés les uns aux autres via un réseau, à fonctionner comme l'appareil de noeud selon la revendication 6.

16. Support d'enregistrement dans lequel le programme de processus de mise à jour d'informations partagées selon la revendication 14 est enregistré de façon lisible par ordinateur.

17. Support d'enregistrement dans lequel le programme de processus de stockage d'informations partagées selon la revendication 15 est enregistré de façon lisible par ordinateur.

18. Appareil de noeud selon la revendication 1, dans lequel
le système de distribution d'informations comprend des appareils de noeud comme des sources de gestion d'informations partagées différentes les unes des autres à des stades de mise à jour respectifs ;
le moyen de mémoire d'informations partagées mémorise des informations partagées à l'un quelconque des stades de mise à jour ;
le moyen d'identification d'appareil de noeud effectue un processus d'identification consistant à identifier un appareil de noeud comme une source de gestion d'informations partagées stockées dans le moyen de mémoire d'informations partagées ;
le moyen d'obtention d'informations de mise à jour effectue un processus d'obtention consistant à obtenir des informations de mise à jour correspondant aux informations partagées mémorisées dans le moyen de mémoire d'informations partagées à partir de l'appareil de noeud identifié ; et
le moyen de mise à jour d'informations partagées effectue un processus de mise à jour consistant à mettre à jour les informations partagées mémorisées dans le moyen de mémoire d'informations partagées sur la base des informations de mise à jour obtenues.

19. Appareil de noeud selon la revendication 18, dans lequel le processus d'identification par le moyen d'identification d'appareil de noeud, le processus d'obtention par le moyen d'obtention d'informations de mise à jour, et le processus de mise à jour par le moyen de mise à jour d'informations partagées sont répétés jusqu'à ce que des informations partagées mémorisées dans le moyen de mémoire d'informations partagées deviennent le dernier état.
